Europäisches Patentamt

European Patent Office

Office européen des brevets

(11) Publication number: **0 429 746 A1**

# EUROPEAN PATENT APPLICATION

(21) Application number: **90109446.6**

(22) Date of filing: **19.06.90**

(51) Int. Cl.5: **B60R 16/04**, H01M 2/10

(30) Priority: **28.11.89 ES 8904061**

(43) Date of publication of application:
**05.06.91 Bulletin 91/23**

(84) Designated Contracting States:
**DE FR GB IT SE Bulletin 1**

(71) Applicant: **UNION PLASTICA LTD.**
**Urbanizacion Acopi**
**Cali(CO)**

(72) Inventor: **Moreno-Cid Velasco, Francisco José**
**Calle 58N 2GN-69**
**Casa No. 34, Cali,(CO)**

(74) Representative: **Gonzalez Gonzalez, Pablo**
**Avda. Alberto Alcocer n 5, 7 D**
**E-28036 Madrid(ES)**

(54) Sprung flange battery tray system.

(57) SPRUNG FLANGE BATTERY TRAY SYSTEM, a one-piece plastic tray system that obviates the need for traditional battery hold-down element and allows the placement and securement of the automobile's battery by pushing it down into the tray (1). Due to the wedging effect caused by pushing downward, the tray's snap-locking flanges (2,2') separate and permit the entrance of the battery's own base flanges. Once the battery has slid in, the tray's flanges snap elastically back into place, holding the battery securely in the tray. Removal is accomplished by pulling the battery upwards until it is released from the snap-locking flanges.

FIG.1

EP 0 429 746 A1

# SPRUNG FLANGE BATTERY TRAY SYSTEM

The following describes a Patent of Invention cocerning a battery hold-down system for automobiles. More specifically, it deals with a tray system which has snap-locking flanges that fasten batteries in automobiles, and which provides considerable advantages over previous battery tray systems for automobiles.

Traditional battery hold-down systems for automobiles consist of numerous elements, such as frames, rods, nuts and bolts, which are laborious and sometimes awkward to assemble and adjust in place within the motor compartment. Comparatively, these traditional systems increase the time and the number of tools and parts required in automobile assembly lines, thus raising costs.

An objective of this invention is to provide a tray systems having snap-locking flanges for use with automobile batteries. The battery tray concept presented here eliminates the need for all of the hold-down hardware that the traditional tray systems require.

This innovative system incorporates snap-locking flanges into the common tray, obviating the need for frames,rods, nuts and bolts to fasten the batteries to the automobiles. In addition, this one-part system allows placement and securement of the battery in a simple manner: pushing the battery down into the tray. Due to the wedging effect caused by pushing downward, the snap-locking flanges separate and permit the entrance of the battery's own base flanges.

Once the battery has slid in, the tray's flanges snap back into place due to the spring effect, holding the battery in place. Removal is accomplished by pulling the battery upwards until it is roleased from the snap-locking flanges.

The Sprung Flange Battery Tray allows substantial time and material savings In automobile assembly lines. Less time is required to fix the batteries in place, and fewer parts and tools are used in the process. Similarly, battery changes performed in maintenance shops are substantially simplified.

Also, because the tray is made out of plastic material, it offers additional advantages such as corrosion resistance and low weight.

Moreover, this tray can be manufactures in any desired color with no need for painting.

In Order to aid in the understanding of the invention's function and form, eight drawings are included with the following descriptions:

Figure 1 illustrates the top view of the present invention, the Sprung flange Battery Tray.

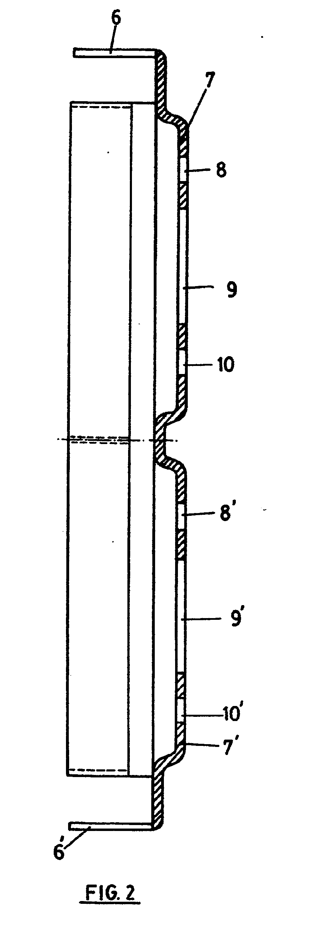

Figure 2 is a cross section along the line A-A' of figure 1.

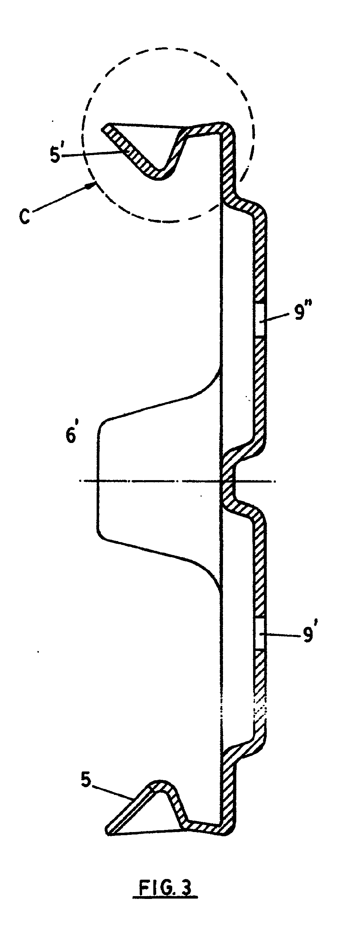

Figure 3 is a cross section along the line B-B' of figure 1.

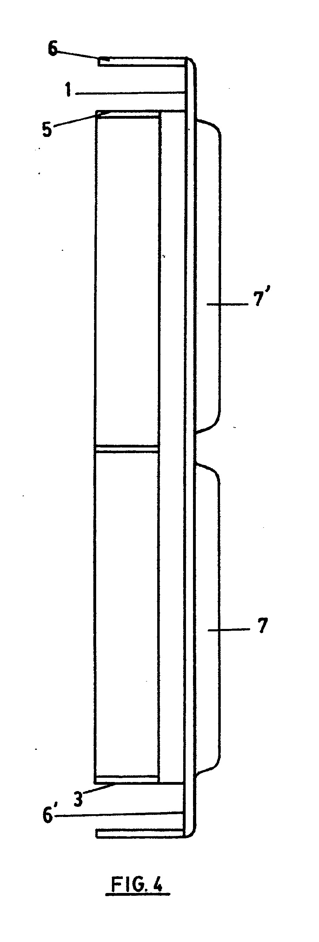

Figure 4 is a side view of the present invention, the Sprung Flange Battery Tray.

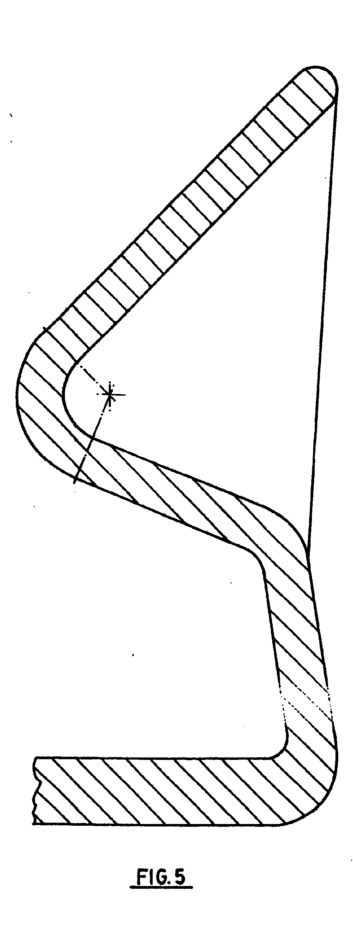

Figure 5 is a magnified view of detail C (indicated in figure 3), illustrating a cross section of the tray's snap-locking flange in its relaxed state.

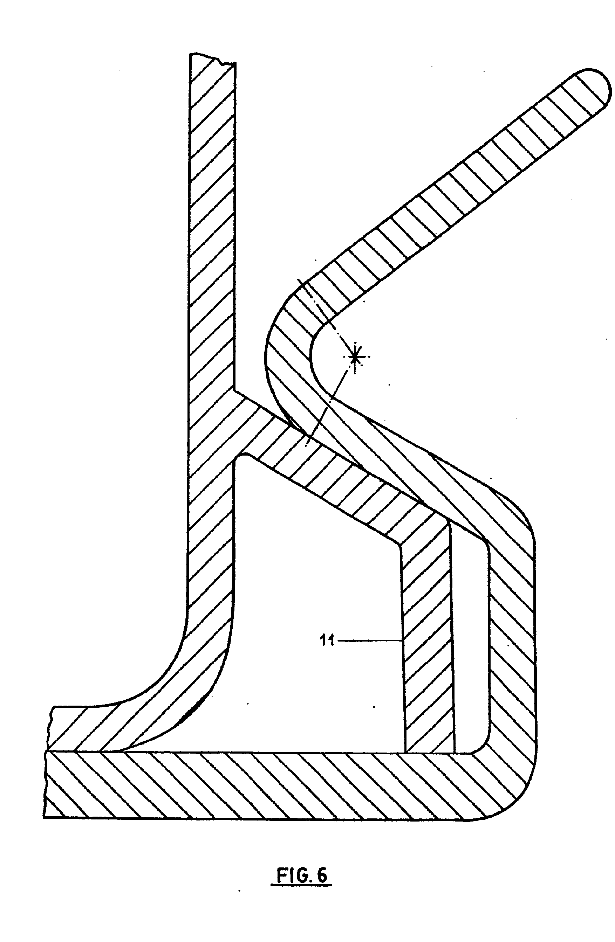

Figure 6 is a magnified view of detail C (indicated in figure 3), illustrating a cross section of the tray's snap-locking flange in its distended state, already clasping the battery.

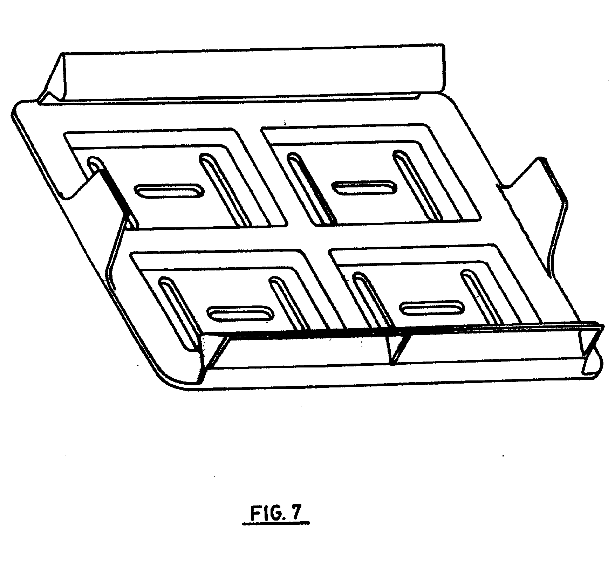

Figure 7 is an isometric drawing of the present invention, the Sprung Flange Battery Tray.

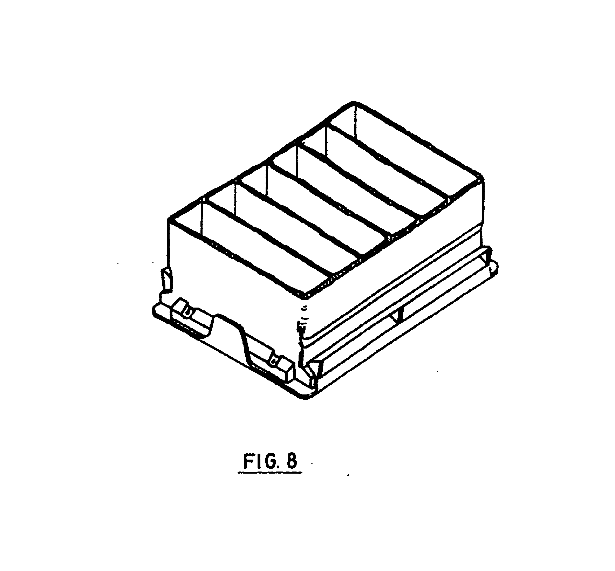

Figure 8 is an isometric drawing of the tray, showing the lower section of a battery that is snapped into place.

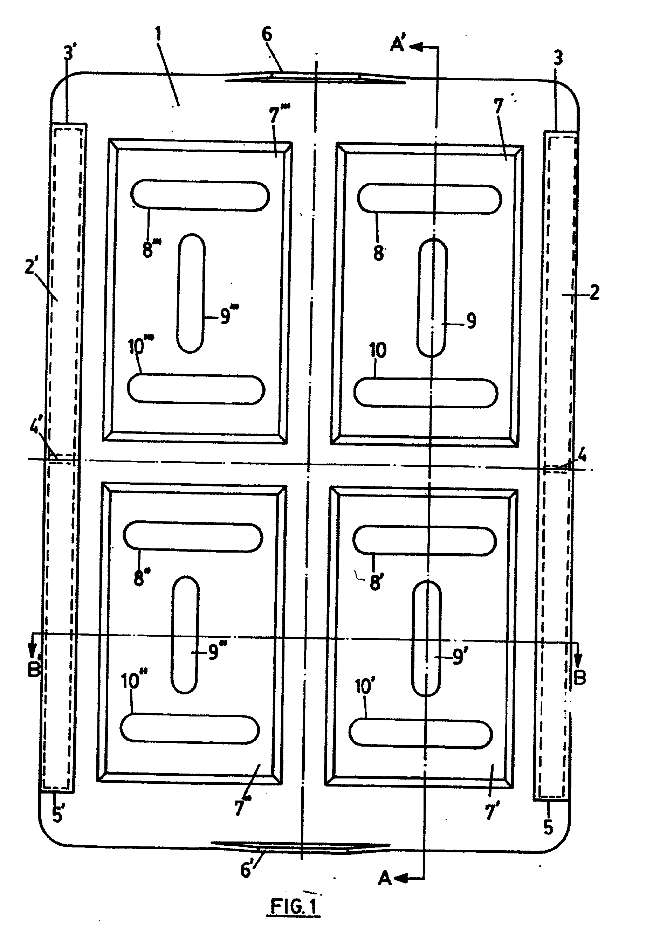

Figure 1 shows a plastic battery tray, essentially rectangular, with two snap-locking flanges (2,2') located along the outer edges of the length of the tray. Each snap-locking flange has three ribs, one in the middle (4,4') and two at the ends (3,5,3',5'), wihich help maintain the shape and rigidity of the flanges.

These snap-locking flanges separate elastically when wedged apart by pressing downward with the bottom part of a battery, allowing the battery to slip in. Inmediately afterwards the spring effect causes the flanges to snap back over the battery's own base flanges (11), on the other hand, pulling the battery upwards releases it from the snap-locking flanges.

At the midpoint of each outer edge of the width of the tray there is a retainer (6,6'), which impedes any longitudinal movement of the battery.

The four rectangular depressions (7,7', 7'',7'''), located symmetrically on the top of the tray, are another important feature of the tray. Each depression has three fastening slots that can be used to secure the tray to the automobile using bolts or rivets. Two of these fastening slots (8,10,8',10',8'',10'',8''',10''') of each depression are positioned parallel to the tray's width, while the third (9,9',9'',9'''), located equidistantly between the other two fastening slots and at the center of the depression, is parallel to the tray's length the total of twelve fastening slots guarantees multiple securement positions of the tray to the automobile. These fastening slots are located inside the rectangular depressions so that the heads of the bolts or rivets that secure the tray to the automobile do not interfere with the installation of the battery. A more extensive description is not necessary for an expert in the subject to understand the invention's extent and advantages.

The materials, form, size and placement of the elements are susceptible to variations if and only if there is no alteration of the essence of the invention.

the terms used in this document to describe the invention should always be understood as ample in their meaning and not limiting.

## Claims

1. SPRUNG FLANGE BATTERY TRAY SYSTEM, characterized by being composed of an essentyally rectangular one-piece plastic tray that has two snap-locking flanges located along the outer edges of the length of the tray.

2. SPRUNG FLANGE BATTERY TRAY SYSTEM, according to claim 1, characterized by having three ribs in each of the snap-locking flanges, one in the middle and two at the ends, and by the snap-locking flanges elastic separation when wedged apart by pressing downward with the base of a battery, which allows the battery to slip in and be secured.

3. SPRUNG FLANGE BATTERY TRAY SYSTEM, according to claims 1 and 2, characterized by having on the top of the aforementioned tray four symmetrically-located rectangular depressions, each depression having three fastening slots used to secure the tray to the automobile with bolts or rivets, and two of those fastening slots of cach depression being positioned parallel to the tray's width, and the third, located equidistantly between the other two fastening slots and at the center of the depression, being parallel to the tray's length.

FIG. 1

FIG. 2

5'

C

9"

6'

9'

5

**FIG. 3**

**FIG. 4**

FIG. 5

**FIG. 6**

FIG. 7

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP - A1 - 0 238 383 (PEUGEOT) <br> * Fig. 1-4 * | 1 | B 60 R 16/04 <br> H 01 M 2/10 |
| A | DE - C2 - 2 850 898 (ANT) <br> * Claims * | 1 | |
| A | DE - A1 - 3 729 611 (VARTA) <br> * Abstract * | 1 | |
| A | CH - A5 - 613 073 (HOPPECKE) <br> * Abstract * | 1 | |
| A | EP - A2 - 0 236 622 (CLARK) <br> * Fig. 1,2 * | 1 | |

TECHNICAL FIELDS
SEARCHED (Int. Cl.5)

B 60 K
B 60 R
H 01 M

The present search report has been drawn up for all claims

| Place of search | Date of completion of the search | Examiner |
|---|---|---|
| VIENNA | 13-12-1990 | KREHAN |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document